# EUROPÄISCHE PATENTSCHRIFT

(11) **EP 3 025 569 B1**
(45) Veröffentlichungstag und Bekanntmachung des Hinweises auf die Patenterteilung: **13.12.2017**
(21) Anmeldenummer: 15194285.1
(22) Anmeldetag: 12.11.2015
(51) Int. Cl.: A01D 34/00, A01D 34/82, A01B 39/16, A01D 34/78, A01B 39/18

(54) **MULCHER**
MULCHER
GYROBROYEUR

(30) Priorität: 26.11.2014 DE 102014117351
(43) Veröffentlichungstag der Anmeldung: 01.06.2016
(73) Patentinhaber: Braun Maschinenbau GmbH, 76829 Landau (DE)
(72) Erfinder: BRAUN, Stefan Jakob, 76835 Burrweiler (DE)
(74) Vertreter: Patentanwälte Bernhardt / Wolff Partnerschaft mbB

(56) Entgegenhaltungen:
- DE-U1- 29 804 575
- DE-U1-202004 007 717
- US-A1- 2013 152 535

## Beschreibung

Die Erfindung betrifft eine Vorrichtung zum Kurzhalten von Bodenbewuchs zwischen parallelen Pflanzenreihen, insbesondere Reihen von Wein- oder Obstpflanzen, mit zwei, jeweils um eine zum Boden senkrechte Achse in ein und derselben Ebene drehbaren Haumesserrotoren, wobei der Abstand zwischen den Drehachsen senkrecht zu den Pflanzenreihen unter Überschneidung der Drehbereiche der Haumesserrotoren verstellbar ist.

Vorrichtungen solcher Art, sog. Mulcher, sind durch Benutzung bekannt. Die Haumesserrotoren dieser bekannten, zur Ankopplung an kleine Traktoren vorgesehenen Mulcher werden durch eine mit dem Traktor verbundene Welle angetrieben. Die Drehung dieser Zapfwelle wird über ein zentrales Getriebe des Mulchers auf eine Sechskantwelle und durch die Sechskantwelle weiter auf den Haumesserrotoren zugeordnete Getriebe des Mulchers übertragen. Bei Verstellung des Abstandes zwischen den Drehachsen der Haumesserrotoren verschieben sich diese Getriebe zusammen mit den Haumesserrotoren entlang der Sechskantwelle.

Ein Mulchgerät, wie vorangehend beschrieben, für den Betrieb mit einer landwirtschaftlichen Zugmaschine, dass die eingangs genannten Merkmale aufweist, geht ferner aus der DE 298 04 575 U1 hervor. Das Gerät weist zwei, sich jeweils um eine zum Boden senkrechte Achse in ein und derselben Ebene drehende Haumesserrotoren auf, wobei der Abstand zwischen den Drehachsen senkrecht zur Fahrtrichtung unter Überschneidung der Drehbereiche der Haumessermotoren verstellbar ist.

Bei Havarien, insbesondere Kollisionen von Messerflügeln der Haumesserrotoren mit Bodenhindernissen, sind die den Haumesserrotoren zugeordneten Getriebe gefährdet. Bei Drehung der Haumesserrotoren in ein und derselben Ebene verbieten sich Schlagwirkungen mindernde Rutschkupplungen zwischen den Haumesserrotoren und dem Getriebe.

Der Erfindung liegt die Aufgabe zugrunde, einen neuen Mulcher der eingangs genannten Art zu schaffen, der bei vereinfachter Konstruktion weniger störanfällig als die bekannten Mulcher ist.

Der diese Aufgabe lösende Mulcher nach der Erfindung ist dadurch gekennzeichnet, dass jedem der Haumesserrotoren ein eigener Elektromotor zugeordnet ist und Einrichtungen zur Steuerung des Elektromotors unter Meidung von Kollisionen zwischen den Haumesserrotoren vorgesehen sind.

Vorteilhaft entfällt durch die Erfindung die aufwendige Übertragung einer Drehbewegung vom Traktor auf die Haumesserrotoren über mehrere Getriebe des Mulchers. Die den Haumesserrotoren individuell zugeordneten Elektroantriebe lassen sich zudem leichter vor Havarieeinflüssen schützen.

In einer bevorzugten Ausführungsform der Erfindung umfassen die Einrichtungen zur Steuerung der Elektroantriebe Mittel zur Bestimmung der Drehwinkel der Rotoren der Elektromotoren. Bei starrer Verbindung des Haumesserrotors mit dem Rotor des Elektromotors über eine Rotorwelle kann so die jeweilige Drehposition des Haumesserrotors bestimmt und durch die Steuerung ggf. so verändert werden, dass eine Havarie zwischen den sich mit ihren Drehbereichen überlappenden Haumesserflügeln der Haumesserrotoren vermieden wird.

Insbesondere sind die Einrichtungen zur Steuerung der Elektromotoren dazu vorgesehen, im normalen Betriebsfall dafür zu sorgen, dass sich die Haumesserflügel synchron mit einer vorgegebenen, ggf. einstellbarer Drehzahl und mit konstanter Drehwinkeldifferenz drehen.

Die Mittel zur Bestimmung der Drehwinkel können für die Drehwinkel repräsentative Signale liefernde Sensoren aufweisen oder zur sensorlosen Bestimmung der Drehwinkel anhand von an den Motoren anliegenden Spannungen und durchfließenden Strömen vorgesehen sein.

In einer weiteren Ausführungsform der Erfindung können die Einrichtungen zur Steuerung der Elektromotoren Mittel zur Erfassung eines Motorstillstands aufweisen. Dadurch können Havariefälle erfasst und ggf. angezeigt werden.

Die Mittel zur Erfassung des Motorstillstands können zur Differentiation des ständig erfassten Drehwinkels nach der Zeit vorgesehen sein, wobei der Stillstand anhand eines bei der Differentiation ermittelten Nullwertes erkennbar ist.

In weiterer Ausgestaltung der Erfindung sind die Einrichtungen zur Steuerung der Elektromotoren zur Steuerung eines Wiederanlaufs der Motoren nach Motorstillstand durch aufeinanderfolgende Drehung der Haumesserrotoren in entgegengesetzten Drehrichtungen vorgesehen. Vorteilhaft kann auf diese Weise ein durch ein Bodenhindernis bewirkter Havariezustand ohne direktes Eingreifen des Traktorfahrers am Mulcher beseitigt werden.

Der Abstand zwischen den Drehachsen der Haumesserrotoren kann hydraulisch verstellbar sein. In einer bevorzugten Ausführungsform ist für die Verstellung ein Elektroantrieb vorgesehen.

Es versteht sich, dass sowohl die den Haumesserrotoren zugeordneten Elektromotoren als auch dieser Elektroantrieb durch eine am Traktor vorgesehene Spannungsquelle versorgt werden können. Als Versorgungsspannungsquelle kommt auch ein gesonderter, durch eine Zapfwelle des Traktors angetriebener Generator in Betracht, der am Traktor oder/und Mulcher montiert sein kann.

Zweckmäßig sind die Elektromotoren unmittelbar auf Gehäuseteilen montiert, die ein nach unten offenes, die Haumesserrotoren aufnehmendes Gehäuse bilden, wobei der Abstand zwischen den Drehachsen der Haumesserrotoren durch Verschiebung der Gehäuseteile gegen eine Trägereinrichtung des Mulchers erfolgt.

Die Erfindung wird nachfolgend anhand von Ausführungsbeispielen und der beiliegenden, sich auf eines dieser Ausführungsbeispiele beziehenden Zeichnungen weiter erläutert. Es zeigen:
- Fig. 1: eine erfindungsgemäße, an einen Traktor gekoppelte Vorrichtung,
- Fig. 2: eine Arbeitsweise von Haumesserrotoren der Vorrichtung von Fig. 1 erläuternde Darstellung, und
- Fig. 3: eine die Steuerung der Vorrichtung von Fig. 1 erläuternde Darstellung.

Eine Vorrichtung (Mulcher) zum Kurzhalten von Bewuchs zwischen parallelen Pflanzenreihen, insbesondere zwischen Reihen von Wein- oder Obstpflanzen, ist an einen geeignet schmalen Traktor 1 koppelbar und umfasst ein flaches, nach unten offenes Gehäuse 2, in welchem sich um eine Achse 3 bzw. 3' Haumesserrotoren 4,4' in einer einzigen, zum Boden 13 parallelen Ebene drehen. Jeder der Haumesserrotoren 4,4' weist zwei, sich in entgegengesetzten Richtungen erstreckende Haumesserflügel auf.

Das Gehäuse 2 umfasst zwei Gehäuseteile 5,5', die gegen eine durch (nicht gezeigte) Rollen auf dem Boden 13 abgestützte Trägereinrichtung 6 gemäß Pfeilen 7,7' senkrecht zu den parallelen Pflanzenreihen verschiebbar sind. Über die Trägereinrichtung 6 lässt sich die Vorrichtung an den Traktor 1 koppeln.

An der eine Mittelplatte 20 und ein Kopplungsteil 21 umfassenden Trägereinrichtung 6 sind (nicht gezeigte) Hydraulikzylinder zur Verschiebung der Gehäuseteile 5,5' gemäß den Pfeilen 7,7' sowie Schienen zur Führung und Halterung der Gehäuseteile 5,5' installiert. Alternativ könnte die Trägereinrichtung 6 mit einem Elektroantrieb zur Verstellung der Gehäuseteile 5,5' versehen sein.

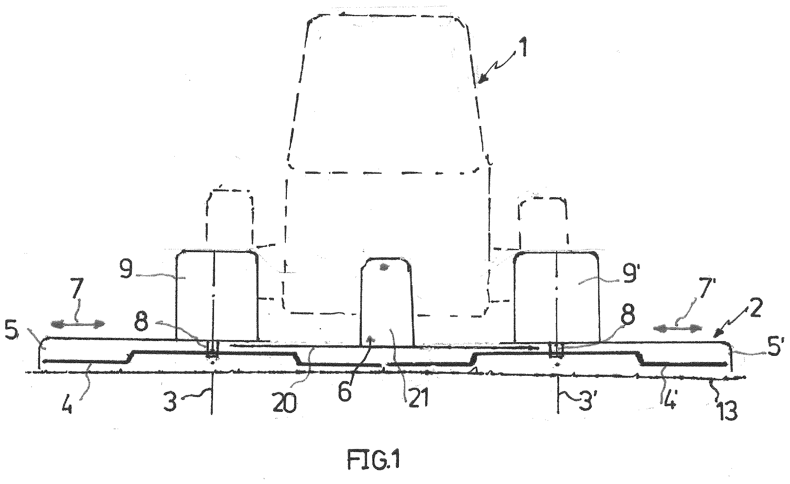

Wie Fig. 1 ferner zeigt, sind die Haumesserrotoren 4,4' über eine durch die betreffende Gehäusewand der Gehäuseteile 5,5' geführte Antriebswelle 8 bzw. 8' mit je einem koaxialen auf dem Gehäuseteil 5,5' angeordneten Elektromotor 9,9' verbunden.

Es versteht sich, dass die Elektromotoren 9,9' und der obengenannte Elektroantrieb durch den Traktor 1 mit Betriebsstrom versorgt werden können. Gegebenenfalls weist der Traktor einen im Vergleich zu dafür herkömmlich üblichen Lichtmaschinen einen in der Leistung gesteigerten, ggf. durch eine Zapfwelle des Traktors angetriebenen Generator oder/und eine Batterie höherer Kapazität auf.

Die Elektromotoren 9,9', bei denen es sich z.B. um Synchronmotoren handelt, umfassen in dem gezeigten Ausführungsbeispiel jeweils einen Sensor, welcher ein für die Drehposition des Rotors repräsentatives Signal liefert.

Der horizontale Abstand zwischen den Drehachsen 3,3' der Haumesserrotoren 4,4' ist in jeder Betriebsstellung der Vorrichtung so bemessen, dass sich die Arbeitsbereiche der Haumesserrotoren 4,4' in Richtung senkrecht zu den Pflanzenreihen, d.h. senkrecht zur Fahrtrichtung des Traktors, überschneiden. Dadurch ist gesichert, dass kein unbearbeiteter Bereich zwischen den Haumesserrotoren verbleibt. Verringert sich der Abstand zwischen den Pflanzenreihen, so ist die Schnittbreite durch Zusammenschieben der Gehäuseteile 5,5' der Abstand zwischen den Drehachsen 3,3' der Haumesserrotoren 4,4' entsprechend zu verringern.

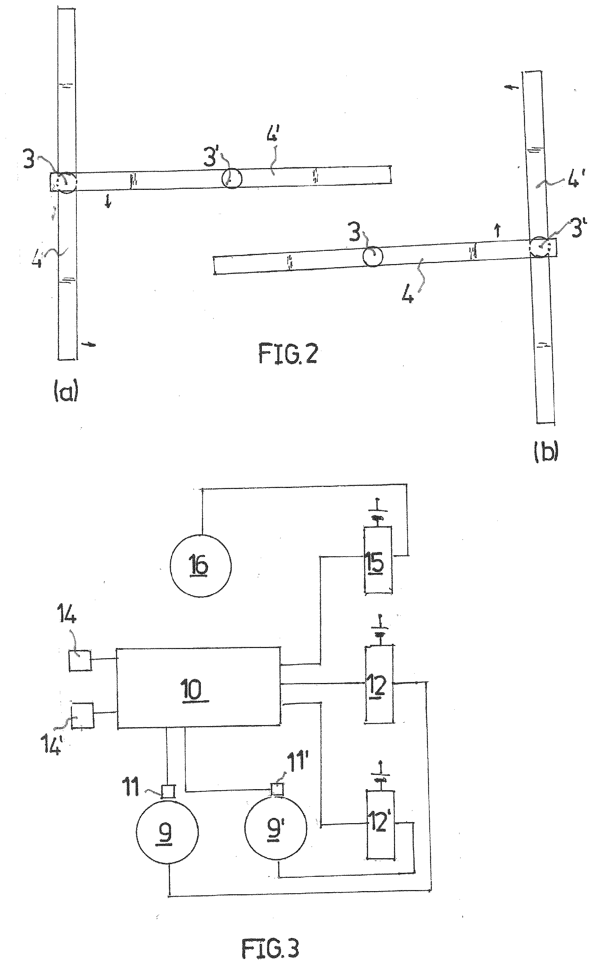

Wie Fig. 2 zeigt, erfordert das Ineinandergreifen der Arbeitsbereiche der Haumesserflügel der Haumesserrotoren 4,4', die sich in ein und derselben Schneidebene drehen, eine synchrone Drehung der Haumesserrotoren 4,4' mit konstanter Drehwinkeldifferenz von vorzugsweise 90 °. Andernfalls wären Kollisionen zwischen den Haumesserflügeln unvermeidlich. In Fig. 2b sind die Haumesserrotoren 4,4' gegenüber Fig. 2a um jeweils 90 ° weitergedreht. Wie Fig. 2 erkennen lässt, greift jeweils ein freies Ende der Haumesserrotoren 4,4' in eine bügelartige Ausbuchtung des jeweils anderen Haumesserrotors ein.

Zur Steuerung der Drehung der Haumesserrotoren 4,4' und Verstellung der Schnittbreite der Vorrichtung dient eine in Fig. 3 gezeigte elektronische Steuereinrichtung 10, welche die Signale von Drehwinkelsensoren 11,11' der Elektromotoren 9,9' empfängt. Die Steuereinrichtung 10 steht in Verbindung mit Leistungsschaltungen 12,12' zur Bestromung der Elektromotoren 9,9' derart, dass bei synchroner Drehung stets eine bestimmte Drehwinkeldifferenz zwischen den Haumesserrotoren 4,4' eingehalten wird.

Die Steuereinrichtung 10 empfängt ferner Signale von Pflanzen in den Reihen erfassenden Tastsensoren 14,14' und erzeugt ein Steuersignal für die Verstellung der Schnittbreite, ggf. steuert sie anstelle einer Verstellhydraulik eine Leistungsschaltung 15 zur Bestromung eines die Schnittbreite verstellenden Elektroantriebs 16 an.

Die Steuereinrichtung 10 umfasst Einrichtungen zur Auswertung der Signale der Drehwinkelsensoren 11,11'. Insbesondere wird durch Differentiation laufend ermittelter Drehwinkel nach der Zeit ein Stillstand des Rotors detektiert. Auf diese Weise lässt sich z.B. ein Havariezustand, bei dem einer der Haumesserrotoren 4,4' durch Anschlag gegen einen Stein zum Stillstand kommt, ermitteln. Durch ein erzeugtes Havariesignal werden die Anschlüsse der Elektromotoren 9,9' freigeschaltet, so dass deren Rotoren widerstandslos drehbar sind und Beschädigungen an den Elektromotoren und den Haumesserrotoren vermieden werden.

Die Steuereinrichtung 10 erlaubt bei einer Havarie eine gesteuerte Rückkehr in den Betriebszustand, d.h. in den Synchronbetrieb bei konstanter Drehwinkeldifferenz, durch Drehanlauf der Haumesserrotoren 4,4' erst in einer Drehrichtung und, falls erforderlich, dann in entgegengesetzter Richtung, so dass eine Verklemmung durch einen Stein auf diese Weise aufgehoben wird. Erst wenn dies nach Drehung in beiden Richtungen nicht gelingt, muss der Traktorfahrer unmittelbar für eine Beseitigung der Havarieursache sorgen.

Es versteht sich, dass ein Stillstand durch Verklemmung auch durch Drehmomente erfassende Sensoren detektiert werden könnte, wobei das Sensorsignal dann über die Steuereinrichtung 10 z.B. für eine Freischaltung einer elektrisch betätigbaren Kupplung sorgen kann.

Die Wellen 8,8' könnten auch eine Rutschkupplung aufweisen, die nur in einer vorgegebenen Drehwinkelposition einrastbar ist.

## Patentansprüche

1. Vorrichtung zum Kurzhalten von Bodenbewuchs zwischen parallelen Pflanzenreihen, insbesondere Reihen von Wein- oder Obstpflanzen, mit zwei, sich jeweils um eine zum Boden senkrechte Achse (3,3') in ein und derselben Ebene drehbaren Haumesserrotoren (4,4'), wobei der Abstand zwischen den Drehachsen (3,3') senkrecht zu den Pflanzenreihen unter Überschneidung der Drehbereiche der Haumesserrotoren (4,4') verstellbar ist,
**dadurch gekennzeichnet,**
**dass** jedem der Haumesserrotoren (4,4') ein eigener Elektromotor (9,9') zugeordnet ist und Einrichtungen (10,11) zur Steuerung der Elektromotoren (9,9') unter Meidung von Kollisionen zwischen den Haumesserrotoren (4,4') vorgesehen sind.

2. Vorrichtung nach Anspruch 1,
**dadurch gekennzeichnet,**
**dass** die Einrichtungen (10,11) zur Steuerung der Elektromotoren (9,9') Mittel (11,11') zur Bestimmung der Drehwinkel der Rotoren der Elektromotoren (9,9') oder/und Haumesserrotoren (4,4') umfassen.

3. Vorrichtung nach Anspruch 1 oder 2,
**dadurch gekennzeichnet,**
**dass** die Einrichtungen (10,11) zur Steuerung der Elektromotoren (9,9') unter Einhaltung einer konstanten, ggf. einstellbaren Betriebsdrehzahl und konstanter Drehwinkeldifferenz der Rotoren bzw. Haumesserrotoren (4,4') vorgesehen sind.

4. Vorrichtung nach Anspruch 2 oder 3,
**dadurch gekennzeichnet,**
**dass** die Mittel zur Drehwinkelbestimmung für die Drehwinkel repräsentative Signale liefernde Sensoren (11,11') aufweisen oder zur sensorlosen Bestimmung der Drehwinkel vorgesehen sind.

5. Vorrichtung nach einem der Ansprüche 1 bis 4,
**dadurch gekennzeichnet,**
**dass** die Einrichtungen (10,11) zur Steuerung der Elektromotoren (9,9') Mittel zur Erfassung eines Motorstillstands aufweisen.

6. Vorrichtung nach Anspruch 5,
**dadurch gekennzeichnet,**
**dass** die Mittel zur Erfassung des Motorstillstands Einrichtungen zur Differentiation des Drehwinkels des Rotors nach der Zeit umfassen.

7. Vorrichtung nach einem der Ansprüche 1 bis 6,
**dadurch gekennzeichnet,**
**dass** die Einrichtungen (10,11) zur Steuerung der Elektromotoren (9,9') zur Steuerung eines Wiederanlaufs der Motoren (9,9') nach Motorstillstand durch Drehung der Haumesserrotoren (4,4') aufeinanderfolgend in entgegengesetzten Richtungen vorgesehen sind.

8. Vorrichtung nach einem der Ansprüche 1 bis 7,
**dadurch gekennzeichnet,**
**dass** der Abstand zwischen den Drehachsen (3,3') der Haumesserrotoren (4,4') hydraulisch oder/und durch einen Elektroantrieb verstellbar ist.

9. Vorrichtung nach einem der Ansprüche 1 bis 8,
**dadurch gekennzeichnet,**
**dass** die Elektromotoren (9,9') und/oder der Elektroantrieb an eine an einem Träger- oder Zugfahrzeug der Vorrichtung vorgesehene Betriebsspannungsquelle anschließbar sind.

10. Vorrichtung nach einem der Ansprüche 1 bis 9,
**dadurch gekennzeichnet,**
**dass** die Elektromotoren (9,9') unmittelbar auf Gehäuseteilen (5,5') eines die Haumesserrotoren (4,4') aufnehmenden, nach unten offenen Gehäuses (2) montiert sind.

11. Vorrichtung nach Anspruch 10,
**dadurch gekennzeichnet,**
**dass** der Abstand zwischen den Achsen der Haumesserrotoren (4,4') durch Verschiebung der Gehäuseteile (5,5') gegen eine Trägereinrichtung (6) verstellbar ist.

## Claims

1. Apparatus for keeping down undergrowth between parallel rows of plants, in particular rows of vines or fruit plants, comprising two machete rotors (4, 4'), which are respectively rotatable in one and the same plane about an axis (3, 3') perpendicular to the ground, the distance between the axes of rotation (3, 3') being adjustable perpendicularly to the rows of plants, with the ranges of rotation of the machete rotors (4, 4') overlapping,
**characterized**
**in that** to each of the machete rotors (4, 4') is assigned its own electric motor (9, 9'), and devices (10, 11) for controlling the electric motors (9, 9') while avoiding collisions between the machete rotors (4, 4') are provided.

2. Apparatus according to Claim 1,
**characterized**
**in that** the devices (10, 11) for controlling the electric motors (9, 9') comprise means (11, 11') for determining the angles of rotation of the rotors of the electric motors (9, 9') and/or machete rotors (4, 4').

3. Apparatus according to Claim 1 or 2,
**characterized**
**in that** the devices (10, 11) for controlling the electric motors (9, 9') are provided for maintaining a constant, possibly adjustable, operating speed and a constant difference in rotational angle of the rotors or machete rotors (4, 4').

4. Apparatus according to Claim 2 or 3,
**characterized**
**in that** the means for determining the angles of rotation comprise sensors (11, 11') which produce signals that are representative of the angles of rotation or are intended for the sensorless determination of the angles of rotation.

5. Apparatus according to one of Claims 1 to 4,
**characterized**
**in that** the devices (10, 11) for controlling the electric motors (9, 9') comprise means for detecting a motor standstill.

6. Apparatus according to Claim 5,
**characterized**
**in that** the means for detecting the motor standstill comprise devices for the time-based differentiation of the angle of rotation of the rotor.

7. Apparatus according to one of Claims 1 to 6,
**characterized**
**in that** the devices (10, 11) for controlling the electric motors (9, 9') are provided for controlling a restart of the motors (9, 9') after a motor standstill by rotating the machete rotors (4, 4') successively in opposite directions.

8. Apparatus according to one of Claims 1 to 7,
**characterized**
**in that** the distance between the axes of rotation (3, 3') of the machete rotors (4, 4') is adjustable hydraulically or/and by an electric drive.

9. Apparatus according to one of Claims 1 to 8,
**characterized**
**in that** the electric motors (9, 9') and/or the electric drive can be connected to an operating voltage source provided on a carrier vehicle or towing vehicle of the apparatus.

10. Apparatus according to one of Claims 1 to 9,
**characterized**
**in that** the electric motors (9, 9') are mounted directly on housing parts (5, 5') of a downwardly open housing (2) that receives the machete rotors (4, 4').

11. Apparatus according to Claim 10,
**characterized**
**in that** the distance between the axes of the machete rotors (4, 4') is adjustable by displacing the housing parts (5, 5') towards a carrier device (6).

## Revendications

1. Dispositif pour maintenir courte la végétation au sol entre des rangées de plantes parallèles, en particulier des rangées de pieds de vigne ou de plantes fruitières, comportant deux rotors à serpe (4, 4') tournant chacun dans un seul et même plan autour d'un axe (3, 3') perpendiculaire au sol, la distance entre les axes de rotation (3, 3') perpendiculairement aux rangées de plantes étant réglable avec chevauchement des zones de rotation des rotors à serpe (4, 4'),
**caractérisé en ce que**
un propre moteur électrique (9, 9') est associé à chacun des rotors à serpe (4, 4') et **en ce que**
il est prévu des organes (10, 11) pour commander les moteurs électriques (9, 9') en évitant des collisions entre les rotors à serpe (4, 4').

2. Dispositif selon la revendication 1,
**caractérisé en ce que**
les organes (10, 11) pour commander les moteurs électriques (9, 9') comprennent des moyens (11, 11') pour déterminer les angles de rotation des rotors des moteurs électriques (9, 9') et/ou des rotors à serpe (4, 4').

3. Dispositif selon la revendication 1 ou 2,
**caractérisé en ce que**
les organes (10, 11) pour commander les moteurs électriques (9, 9') sont prévus de manière à conserver une vitesse de rotation constante, le cas échéant réglable, et une différence constante des angles de rotation des rotors ou des rotors à serpe (4, 4').

4. Dispositif selon la revendication 2 ou 3,
**caractérisé en ce que**
les moyens pour déterminer les angles de rotation comprennent des capteurs (11, 11') délivrant des signaux représentatifs des angles de rotation ou sont prévus pour déterminer les angles de rotation sans capteur.

5. Dispositif selon l'une des revendications 1 à 4,
**caractérisé en ce que**
les organes (10, 11) pour commander les moteurs électriques (9, 9') comprennent des moyens pour détecter un arrêt du moteur.

6. Dispositif selon la revendication 5,
**caractérisé en ce que**
les moyens pour détecter un arrêt du moteur comprennent des organes pour différencier l'angle de rotation du rotor en fonction du temps.

7. Dispositif selon l'une des revendications 1 à 6,
**caractérisé en ce que**
les organes (10, 11) pour commander les moteurs électriques (9, 9') sont prévus pour commander un redémarrage des moteurs (9, 9') après un arrêt du moteur par rotation des rotors à serpe (4, 4') successivement dans des directions opposées.

8. Dispositif selon l'une des revendications 1 à 7,
**caractérisé en ce que**
la distance entre les axes de rotation (3, 3') des rotors à serpe (4, 4') est réglable par voie hydraulique ou/et par un entraînement électrique.

9. Dispositif selon l'une des revendications 1 à 8,
**caractérisé en ce que**
les moteurs électriques (9, 9') et/ou l'entraînement électrique sont susceptibles d'être connectés à une source de tension de service prévue sur un véhicule porteur ou tracteur du dispositif.

10. Dispositif selon l'une des revendications 1 à 9,
**caractérisé en ce que**
les moteurs électriques (9, 9') sont montés directement sur des parties de boîtier (5, 5') d'un boîtier (2) ouvert vers le bas et recevant les rotors à serpe (4, 4').

11. Dispositif selon la revendication 10,
**caractérisé en ce que**
la distance entre les axes des rotors à serpe (4, 4') est réglable par déplacement des parties de boîtier (5, 5') contre un organe porteur (6).
